# EUROPÄISCHE PATENTANMELDUNG

(11) **EP 2 065 732 A2**
(43) Veröffentlichungstag der Anmeldung: **03.06.2009**
(21) Anmeldenummer: 08019966.4
(22) Anmeldetag: 14.11.2008
(51) Int. Cl.: G01S 17/06

(54) **Optischer Sensor und Verfahren zur Positionsbestimmung von Objekten**

(30) Priorität: 15.11.2007 DE 102007054596
(71) Anmelder: Pepperl + Fuchs GmbH, 68307 Mannheim (DE)
(72) Erfinder: Unger, Holger, 13503 Berlin (DE); Luxem, Wolfgang, 12203 Berlin (DE); Filler, Thomas, 12623 Berlin (DE)
(74) Vertreter: Schiffer, Axel Martin

(57) **Zusammenfassung**

Die Erfindung betrifft einen optischen Sensor zur Positionsbestimmung von Objekten mit einer Mehrzahl von Lichtsendern zum Aussenden von Licht, wobei jedem Lichtsender ein Überwachungsteilbereich zugeordnet ist, in welchen der jeweilige Lichtsender Lichtsignale aussendet. Außerdem ist eine Ansteuereinheit zum Ansteuern der Lichtsender vorgesehen. Der optische Sensor ist erfindungsgemäß dadurch gekennzeichnet, dass zum Nachweis von von einem nachzuweisenden Objekt reflektiertem und/oder gestreutem Licht genau ein gemeinsamer Detektor vorhanden ist, welcher genau ein zeitabhängiges Detektionssignal liefert, dass die Ansteuereinheit zum zeitlich jeweils unterschiedlichen Aktivieren der verschiedenen Lichtsender eingerichtet ist, dass eine mit dem Detektor verbundene Auswerteeinheit vorhanden ist, die mit der Ansteuereinheit zusammenwirkt und zum Auswerten des Detektionssignals sowie zum Zuordnen von einzelnen Anteilen des Detektionssignals zu Lichtsignalen der verschiedenen Lichtsender eingerichtet ist, dass die Auswerteeinheit zum Abspeichern von für das nachzuweisende Objekt spezifischen Vergleichsdaten eingerichtet ist und dass die Auswerteeinheit für das Bestimmen und Ausgeben einer Position des nachzuweisenden Objekts im Überwachungsbereich durch Vergleich der einzelnen Signalanteile mit den Vergleichsdaten eingerichtet ist. Die Erfindung bezieht sich außerdem auf ein Verfahren zur Positionsbestimmung von Objekten.

## Beschreibung

Die vorliegende Erfindung bezieht sich in einem ersten Aspekt auf einen optischen Sensor zur Positionsbestimmung von Objekten in einem Überwachungsbereich nach dem Oberbegriff des Anspruchs 1.

In einem zweiten Gesichtspunkt betrifft die Erfindung ein Verfahren zur Positionsbestimmung von Objekten in einem Überwachungsbereich nach dem Oberbegriff des Anspruchs 9.

Ein gattungsgemäßer optischer Sensor und ein gattungsgemäßes Verfahren sind beispielsweise aus DE 100 55 689 A1 bekannt.

Ein optischer Sensor der genannten Art weist eine Mehrzahl von Lichtsendern zum Aussenden von Licht auf, wobei jedem Lichtsender ein Überwachungsteilbereich zugeordnet ist, in welchen der jeweilige Lichtsender Lichtsignale aussendet. Außerdem ist eine Ansteuereinheit zum Ansteuern der Lichtsender vorgesehen.

Bei einem Verfahren der genannten Art sendet eine Mehrzahl von Lichtsendern Licht in Überwachungsteilbereiche aus, die den Lichtsendern jeweils zugeordnet sind.

Bei konventionellen Reflexionslichtschranken sendet ein Lichtsender Licht aus und dieses wird von Objekten in einem Überwachungsbereich und/oder von einem Reflektor zurückgestreut oder zurückgestrahlt und sodann in einem Empfänger nachgewiesen. Das Licht kann beispielsweise vom Sender durch einen halbdurchlässigen Spiegel und eine Linse zum Retroreflektor gelangen, wird dann vom Retroreflektor zur Linse zurückreflektiert und anschließend von dem halbdurchlässigen Spiegel zu einem Empfänger reflektiert. Bei Überschreiten eines Entscheidungsschwellwerts der auf den Empfänger auftreffenden Lichtleistung schaltet die Lichtschranke aus, da der Lichtweg zwischen der Lichtschranke und dem Retroreflektor frei ist.

Wenn sich ein diffus reflektierendes Objekt zwischen Sensor und Retroreflektor befindet, trifft der Lichtstrahl nicht auf den Retroreflektor. Der Retroreflektor reflektiert das Licht gerichtet zurück, wogegen ein diffus reflektierendes Objekt das Licht vergleichsweise breit streut und nur einen geringen Anteil des Lichts in Richtung des Sensors zurück reflektiert. Daraus erfolgt, dass die am Empfänger ankommende Lichtleistung geringer ist, als wenn das Licht vom Reflektor reflektiert wird. Entsprechend wird der Entscheidungsschwellwert unterschritten und der Sensor schaltet ein.

Wenn größere Raumbereiche überwacht werden sollen, können auch mehrere Lichtschranken parallel eingesetzt werden. Man spricht dann auch von Lichtvorhängen oder Lichtgittern. Ein solches Lichtgitter ist beispielsweise in DE 100 55 689 A1 beschrieben.

Zum Nachweis des auf die einzelnen Lichtquellen zurückgehenden gestreuten und/oder reflektierten Lichts ist bei der Anordnung von DE 100 55 689 A1 jedem Lichtsender jeweils ein Detektor zugeordnet. Ein solcher Aufbau ist vergleichsweise aufwändig und teuer.

Weitere optische Sensoren, bei denen mehrere Lichtsender eingesetzt werden, sind in DE 10 2005 033 349 A1, EP 1 154 225 B1, EP 1 722 191 A1, EP 1 528 411 A1, DE 39 19 917 C2, DE 196 53 312 C1 und DE 10 2006 011 250 A1 beschrieben. Ein optischer Sensor, bei welchem ein Einlernvorgang durchgeführt wird, ist in EP 1 498 747 A1 offenbart.

**Aufgabe** der Erfindung ist, einen optischen Sensor zur Positionsbestimmung von Objekten in einem Überwachungsbereich zu schaffen, der besonders einfach und kompakt aufgebaut ist und gleichwohl eine hohe Funktionalität aufweist. Außerdem soll ein Verfahren zur Positionsbestimmung von Objekten in einem Überwachungsbereich angegeben werden, welches besonders vielseitig einsetzbar ist.

Diese Aufgabe wird in einem ersten Gesichtpunkt gelöst durch den optischen Sensor mit den Merkmalen des Anspruchs 1.

In einem zweiten Aspekt wird die Aufgabe gelöst durch das Verfahren mit den Merkmalen des Anspruchs 9.

Bevorzugte Ausgestaltungen des erfindungsgemäßen optischen Sensors und vorteilhafte Varianten des erfindungsgemäßen Verfahrens sind Gegenstand der nachfolgenden Beschreibung, der Figuren mit zugehöriger Figurenbeschreibung sowie der Unteransprüche.

Der optische Sensor der oben genannten Art ist erfindungsgemäß dadurch weitergebildet, dass zum Nachweis von von einem nachzuweisenden Objekt reflektiertem und/oder gestreutem Licht genau ein gemeinsamer Detektor vorhanden ist, welcher genau ein zeitabhängiges Detektionssignal liefert, dass die Ansteuereinheit zum zeitlich jeweils unterschiedlichen Aktivieren der verschiedenen Lichtsender eingerichtet ist, dass eine mit dem Detektor verbundene Auswerteeinheit vorhanden ist, die mit der Ansteuereinheit zusammenwirkt und zum Auswerten des Detektionssignals sowie zum Zuordnen von einzelnen Anteilen des Detektionssignals zu Lichtsignalen der verschiedenen Lichtsender eingerichtet ist, dass die Auswerteeinheit zum Abspeichern von für das nachzuweisende Objekt spezifischen Vergleichsdaten eingerichtet ist und dass die Auswerteeinheit für das Bestimmen und Ausgeben einer Position des nachzuweisenden Objekts im Überwachungsbereich durch Vergleich der einzelnen Signalanteile mit den Vergleichsdaten eingerichtet ist.

Das Verfahren der oben genannten Art ist erfindungsgemäß dadurch weitergebildet, dass von dem nachzuweisenden Objekt im Überwachungsbereich und/oder von einem Reflektor reflektiertes und/oder gestreutes Licht mit genau einem gemeinsamen Detektor nachgewiesen wird, dass dem von den verschiedenen Lichtsendern ausgehenden Licht eine jeweils unterschiedliche zeitliche Struktur aufgeprägt wird, dass das Detektorsignal bezüglich der auf die unterschiedlichen Lichtsender zurückgehenden Signalanteile ausgewertet wird, dass für das nachzuweisende Objekt gemessene Normalwerte der gestreuten und/oder reflektierten Lichtintensität als Vergleichsdaten eingelernt werden, dass die auf die unterschiedlichen Lichtsender zurückgehenden Signalanteile des Detektorsignals mit den Vergleichsdaten verglichen werden und dass abhängig vom Resultat dieses Vergleichs eine Position des Objektes bestimmt und ausgegeben wird.

Eine wesentliche Erkenntnis der Erfindung besteht darin, dass die Funktionalität mehrerer Detektoren, soweit die entsprechenden Strahlengänge dies ermöglichen, bereits weitgehend durch einen einzigen Detektor realisiert werden können. Hierzu wird den Lichtsignalen der einzelnen Lichtsender eine geeignete zeitliche Struktur aufgeprägt, anhand welcher die auf die entsprechenden Lichtsender zurückgehenden Anteile des Detektorsignals voneinander getrennt werden können. Somit besteht ein erster Kerngedanke der Erfindung darin, im Unterschied zu DE 100 55 689 A1 das aus dem Überwachungsbereich zurückgestrahlte oder zurückreflektierte Licht nicht mehr mit einer Mehrzahl von einer Detektoren, sondern nur mit genau einem Detektor nachzuweisen, der entsprechend genau ein zeitabhängiges Detektionssignal ausgibt. Hierdurch kann der optische Sensor bereits erheblich einfacher, kompakter und somit kostengünstiger aufgebaut werden.

Ein weiterer Kerngedanke besteht darin, den Lichtsignalen der einzelnen Lichtsender eine jeweils unterschiedliche Zeitstruktur aufzuprägen, beispielsweise das ausgesendete Licht jeweils unterschiedlich zu modulieren, und das Detektionssignal im Hinblick auf die auf die einzelnen Lichtsender zurückgehenden Anteile auszuwerten.

Schließlich besteht ein Grundgedanke der Erfindung darin, die von dem nachzuweisenden Objekt normalerweise zurückgestreuten und/oder zurückreflektierten Lichtintensitäten einzulernen, diese eingelernten Daten mit den Messdaten zu vergleichen und abhängig von diesem Vergleich ein Positionssignal zu ermitteln und auszugeben. Hierdurch kann die Präzision bei der Positionsbestimmung deutlich erhöht werden.

Wegen des Vergleichs der Messdaten mit zuvor eingelernten Vergleichswerten eignen sich der erfindungsgemäße optische Sensor und das erfindungsgemäße Verfahren besonders zum Nachweis und zur Positionsbestimmung von grundsätzlich bekannten Objekten.

Ein wesentlicher Vorteil des erfindungsgemäßen optischen Sensors und des erfindungsgemäßen Verfahrens besteht darin, dass durch den zusätzlichen Lichtsender eine Vielzahl von neuen Funktionalitäten bereitgestellt werden, die nachstehend im Einzelnen beschrieben werden.

Neben der sehr kompakten Bauform zeichnet sich der erfindungsgemäße optische Sensor insbesondere durch eine einfache Installation aus, da hier nur eine statt zwei oder mehrere Lichtschranken zu montieren ist. Weiterhin werden bei dem erfindungsgemäßen Verfahren und dem erfindungsgemäßen Sensor Schwierigkeiten und Probleme der gegenseitigen Beeinflussung, wie sie bei der Verwendung von mehreren einzelnen Sensoren auftreten, weitestgehend vermieden. Weiterhin lässt sich der erfindungsgemäße Sensor zu deutlich geringeren Kosten fertigen als zwei oder mehrere Sensoren, welche dieselbe Funktionalität liefern würden.

Ein sehr wichtiger Vorteil der Erfindung ist weiterhin, dass Teile der Auswertung, die bei Einsatz mehrerer konventioneller Sensoren in der Anwendung, also in einer übergeordneten Einrichtung, programmiert sind, bereits vom Sensor selbst vorgenommen werden können.

Der erfindungsgemäße optische Sensor kann grundsätzlich als Lichttaster eingesetzt werden, das heißt, dass im Wesentlichen das von einem nachzuweisenden Objekt und/oder gegebenenfalls von einer Hintergrundfläche gestreute und/oder reflektierte Licht nachgewiesen wird. Hierbei können auch diffus reflektierende Objekte erkannt werden. Durch Anpassung der Empfindlichkeit des Empfängers kann der erfindungsgemäße optische Sensor auch als Reflexionslichtschranke verwendet werden, das heißt, dass ein Reflektor zum Begrenzen des Überwachungsbereichs vorhanden ist. Ein solcher Reflektor kann im Grundsatz beliebige Formen aufweisen und prinzipiell auch mehrteilig gebildet, also aus einer Mehrzahl von Einzelreflektoren aufgebaut sein.

Als Detektoren können grundsätzlich bekannte Fotodetektoren, vor allem also Halbleiterdetektoren, verwendet werden. Ein wesentlicher erfindungsgemäßer Vorteil ist, dass nur ein einzelner Detektor benötigt wird. Bei einer besonders einfachen Ausgestaltung weist dieser Detektor nur ein einziges Detektorelement auf. Hierdurch wird der Aufbau des Sensors insgesamt wesentlich vereinfacht.

Bei einem besonders bevorzugten Ausführungsbeispiel weist der optische Sensor genau zwei Lichtsender auf. Mit einem solchen Sensor können im Wesentlichen bereits alle nachstehend beschriebenen Funktionalitäten bereitgestellt werden.

An die Lichtsender ist grundsätzlich keine hohe Anforderung gestellt und es können prinzipiell bekannte Komponenten verwendet werden. Bei einer bevorzugten Ausgestaltung sind die Lichtsender Infrarot-Lichtquellen, insbesondere Infrarot-Laserdioden. Die Ansteuereinheit für die Lichtsender und die Auswerteeinheit für das Detektorsignal können zweckmäßig in einem Mikrocontroller integriert sein.

Im Hinblick auf die zeitliche Struktur der Lichtsignale der verschiedenen Lichtsender bestehen zahlreiche Variationsmöglichkeiten. Wichtig ist hierbei, dass die Lichtsignale der einzelnen Lichtsender hinreichend verschieden sind, damit die entsprechenden Anteile des Detektorsignals gut getrennt werden können. Beispielsweise werden die Lichtsender mit jeweils unterschiedlichen Frequenzen moduliert. Bei einer besonders einfachen Variante des erfindungsgemäßen Verfahrens werden die Lichtsender abwechselnd gepulst. Grundsätzlich ist es möglich, dass das Sendelicht und das vom Detektor nachzuweisende Licht mit ein- und derselben Optik sowie einem teildurchlässigen Spiegel in den Überwachungsbereich geleitet und aus dem Überwachungsbereich auf den Detektor geführt wird. Mit einer solchen Autokollimationsoptik können besonders kompakte Anordnungen erreicht werden.

Bei einer kostengünstigen Variante ist zum Leiten des Lichts der Lichtsender in den Überwachungsbereich eine gemeinsame Sendeoptik vorhanden und zum Leiten des Lichts auf den Detektor ist eine von der Sendeoptik verschiedene Detektoroptik vorhanden.

Besonders bevorzugt ist weiterhin, wenn die Vergleichsdaten für eine Vielzahl von Positionen des Objekts abgespeichert werden. Der optische Sensor kann dann noch aussagekräftigere Messresultate liefern. Beispielsweise kann in einer einfachen Anwendung für die zu überwachenden Objekte eine Höhenkontrolle durchgeführt werden. Bei einer weiteren Verwendungsvariante, die ebenfalls im industriellen Bereich viele Einsatzmöglichkeiten hat, wird eine Position des Objekts in einer Richtung quer zu einer Erstrekkungsrichtung der Hauptstrahlrichtungen der Lichtsender bestimmt. Schließlich kann grundsätzlich auch eine Bewegungsrichtung und gegebenenfalls auch eine Geschwindigkeit eines zu überwachenden Objekts bestimmt werden.

Bei einer weiteren bevorzugten Variante weist das zu überwachende Objekt eine Streifenstruktur auf, welche so gestaltet ist, dass sie Schaltvorgänge des optischen Sensors auslösen kann, und der optische Sensor wird entsprechend als Inkrementalgeber betrieben. Hierbei kann eine Geschwindigkeits- und/oder Wegbestimmung bereits mit äußerst geringen aparativen Mitteln erzielt werden.

Besonders vorteilhafte Anwendungen hat das erfindungsgemäße Verfahren für Messsituationen, wo das zu überwachende Objekt eine Kante eines bahnartigen Materials ist und wobei der optische Sensor bezüglich der Kante so positioniert wird, dass mindestens für den Strahlengang eines Lichtsenders ein Teil des Lichts durchgelassen wird und ein weiterer Teil von der Kante abgeblockt wird.

Eine solche Bahnkantenerkennung ist mit Hilfe des erfindungsgemäßen optischen Sensors und des erfindungsgemäßen Verfahrens auf sehr einfache und dabei präzise und flexibel möglich. Hierbei werden beide Sensoren ausgewertet. Bei einer ersten Möglichkeit wird hierbei ein Kanal zur Bewertung der Position der Bahnkante verwendet und der andere Kanal wird zur Überwachung und gegebenenfalls zur Nachregelung des ersten Kanals eingesetzt.

Diese Verfahrensvariante ist für alle Einsatzzwecke vorteilhaft, wo ein erster Lichtweg ständig belegt, also nie frei ist, und wo deshalb eine Nachregelung nicht über einen einzigen Kanal erfolgen kann.

Die verschiedenen Überwachungsteilbereiche können prinzipiell völlig unterschiedlich sein, also keinerlei Überdeckungen aufweisen. Bei bestimmten bevorzugten Ausgestaltungen werden die Lichtsender jedoch gezielt so angeordnet, dass sich die Überwachungsteilbereiche von mindestens zwei Lichtsender überlappen. Hierdurch wird eine vorteilhafte Verfahrensvariante ermöglicht, bei der mindestens ein Verhältnis von auf verschiedene Lichtsender zurückgehenden Signalanteilen des Detektorsignals gebildet und ausgewertet wird.

Bei dieser Verfahrensvariante werden demnach Verhältnisse von überlappenden Lichtflecken gebildet. Hierbei ist die Optik des Sensors so anzupassen, dass sich die Lichtflecke der mindestens zwei Lichtquellen, beispielsweise auf dem nachzuweisenden Objekt, überlappen. Dieses Prinzip lässt sich sowohl unter Verwendung eines Retroreflektors, als auch im tastenden Betrieb anwenden, wenn die Empfindlichkeit der Auswertung entsprechend erhöht wird.

Wieder können die beiden Lichtsender abwechselnd gepulst werden, um jeweils das Empfangssignal auswerten zu können. Die Kante eines Objekts, dessen Position auszuwerten ist, muss sich im Überlappungsbereich der beiden Kanäle befinden. Während eines Einlernvorganges ermittelt und speichert der Sensor das Verhältnis der beiden Empfangssignale. Dieses Verhältnis wird wie das oben beschriebene Empfangssignal ausgewertet. Der Vorteil dieser Anordnung besteht darin, dass der Abstand vom Sensor und die Oberflächeneigenschaften des Objekts im Wesentlichen keinen Einfluss auf die Orte der Schaltpunkte haben. Die Optik sollte hierzu so ausgelegt sein, dass der Überlappungsbereich einen parallelen Strahlengang mit konstantem Durchmesser bildet.

Weitere Vorteile und Merkmale des erfindungsgemäßen optischen Sensors und des erfindungsgemäßen Verfahrens werden nachstehend mit Bezug auf die beigefügten Figuren in weiteren Details beschrieben.

### Hierin zeigt:

- Fig. 1: ein erstes Ausführungsbeispiel eines erfindungsgemäßen optischen Sensors;
- Fig. 2: den optischen Sensor aus Fig. 1 in einem Anwendungsbeispiel;
- Fig. 3: ein zweites Ausführungsbeispiel eines erfindungsgemäßen optischen Sensors;
- Fig. 4: ein weiteres Anwendungsbeispiel eines erfindungsgemäßen optischen Sensors zur Bahnkantenerkennung;
- Fig. 5: ein weiteres Anwendungsbeispiel eines erfindungsgemäßen optischen Sensors zur Bahnkantenerkennung;
- Fig. 6: ein erstes Beispiel für Form und Position von zwei sich überlappenden Lichtflecken; und
- Fig. 7: ein zweites Beispiel für Form und Position von zwei sich überlappenden Lichtflecken.

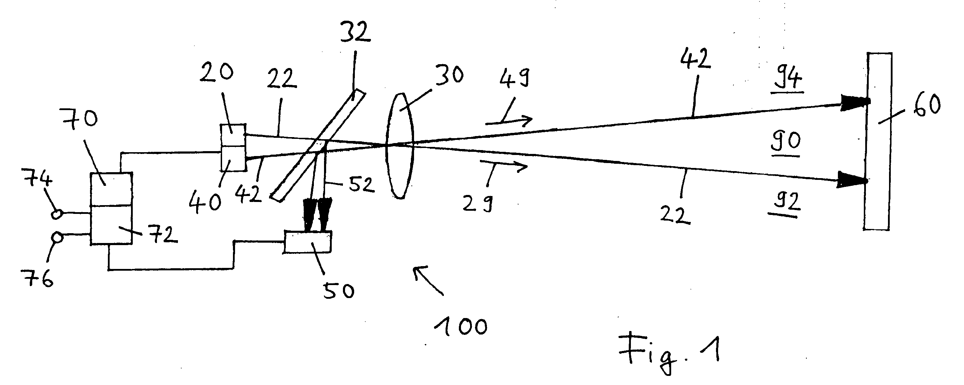

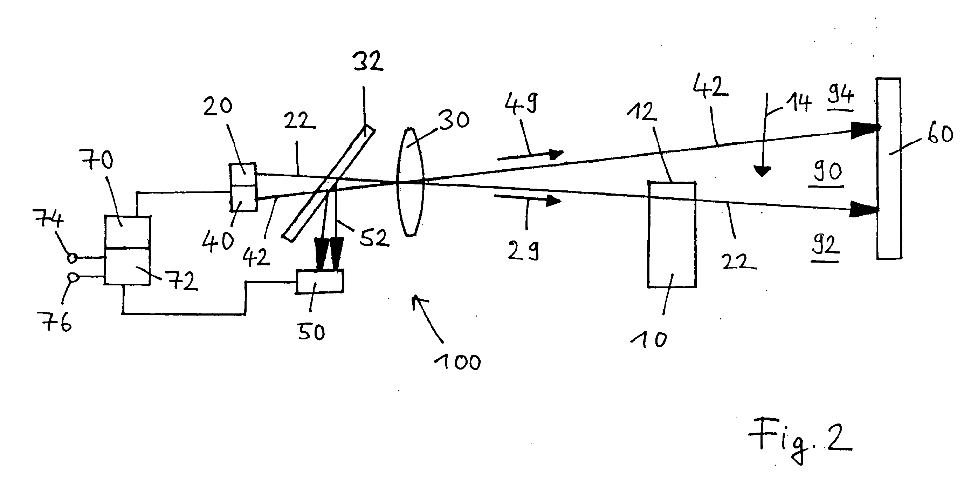

Ein erstes Ausführungsbeispiel der Erfindung wird mit Bezug auf die Figuren 1 und 2 beschrieben. Äquivalente Komponenten sind in allen Figuren mit denselben Bezugszeichen versehen.

Der in den Figuren 1 und 2 dargestellte optische Sensor 100 weist als wesentliche Bestandteile zwei Lichtsender 20, 40 mit einer Ansteuereinheit 70 zum Ansteuern dieser Lichtsender 20, 40, eine Autokollimationsoptik 30 mit einem teildurchlässigen Spiegel 32 und einen Detektor 50 mit einer Auswerteeinheit 72 auf. Die Lichtsender 20, 40, bei denen es sich um Infrarot-Laserdioden handeln kann, sind unmittelbar nebeneinander, beispielsweise auf einer Leiterplatte, angeordnet. Der Lichtsender 20 emittiert Licht 22 entlang einer Hauptstrahlrichtung 29 in einen diesem Lichtsender 20 zugeordneten Überwachungsteilbereich 92. Entsprechend sendet der Lichtsender 40 Licht 42 entlang einer Hauptstrahlrichtung 49 in einen, dem Lichtsender 40 zugeordneten Überwachungsteilbereich 94.

Die Überwachungsteilbereiche 92, 94 bilden einen Überwachungsbereich 90, der von einem Retroreflektor 60 begrenzt wird. Im gezeigten Beispiel handelt es sich bei dem optischen Sensor 100 demgemäß um eine Reflexionslichtschranke.

Die von den Lichtsendern 20,40 ausgesandten Lichtsignale treten zunächst durch einen teildurchlässigen Spiegel 32 und werden sodann von der Autokollimationsoptik 30 entlang der Hauptstrahlrichtungen 29, 49 in den Überwachungsbereich 90 geleitet. Nach Reflexion oder Streuung am Retroreflektor 60 und erneutem Durchtritt durch die jeweiligen Überwachungsteilbereiche 92, 94 tritt das Licht 22, 42 erneut durch die Autokollimationsoptik 30 und wird anschließend mindestens teilweise am teil- oder halbdurchlässigen Spiegel 32 in Richtung des Detektors 50 geleitet und dort quantitativ und zeitaufgelöst nachgewiesen. Das vom Detektor 50 nachzuweisende Licht ist mit dem Bezugszeichen 52 versehen.

Die Lichtsender 20, 40 werden von der Ansteuereinheit 70 angesteuert, wobei den einzelnen Lichtsendern 20, 40 jeweils eine unterschiedliche zeitliche Struktur aufgeprägt wird.

Der Detektor 50 ist mit der Auswerteeinheit 72 verbunden, welche das Detektorsignal im Hinblick auf die einzelnen, auf die Lichtsender 20, 40 zurückgehenden Anteile auswertet und zerlegt. Diese Signalanteile werden anschließend mit zuvor gewonnenen Einlerndaten verglichen. Abhängig vom Ergebnis dieses Vergleichs werden dann an Schaltausgängen 74, 76 Schaltsignale ausgegeben.

In einem einfachen Fall werden die Sender 20, 40 beispielsweise abwechselnd gepulst betrieben. Zu jedem ausgesandten Lichtpuls wird dann die auf dem gemeinsamen Detektor 50 auftreffende Lichtleistung ausgewertet. Dadurch ist es möglich, grundsätzlich mehrere unabhängige Bereiche zu überwachen. Im gezeigten Beispiel sind dies die Überwachungsteilbereiche 92, 94. Befindet sich beispielsweise ein Objekt im Überwachungsteilbereich 92, also im Strahlengang des Lichts 22, so wird das auf den Lichtsender 20 zurückgehende Signal des Detektors 50 deutlich geringer sein, als wenn sich dort kein Objekt befindet. Entsprechend verhält es sich im Überwachungsteilbereich 94 und dem auf den Lichtsender 40 zurückgehenden Signalanteil des Detektorsignals.

Mit diesem Prinzip lassen sich zwei oder grundsätzlich auch mehrere Lichtschranken ersetzen, die sonst direkt nebeneinander angeordnet werden müssten. Der Sensor kann grundsätzlich auch als Lichttaster ausgebildet werden, wobei dann kein Retroreflektor zum Einsatz kommt. Bei deutlich empfindlicherer Auswertung der empfangenen Signale als bei der hier beschriebenen Reflektionslichtschranke kann das reflektierte Licht von diffus reflektierenden oder streuenden Objekten als Schaltsignal verwendet werden. Zur Auswertung in der Anwendung kann der Sensor 100 mit zwei oder mehreren Ausgängen 74, 76 versehen werden, wobei jeder Ausgang 74, 76 einem Überwachungsteilbereich 92, 94 zugeordnet sein kann, das heißt ein Ausgang 74, 76 schaltet genau dann, wenn sich im zugeordneten Überwachungsbereich 92, 94 ein Objekt befindet. Für den Anwender verhält sich der Sensor 100 dann wie zwei oder mehrere Einzelsensoren.

In dem beschriebenen Sensor kann auch bereits eine Auswertung vorgenommen werden, die bei Verwendung von zwei oder mehreren Einzelsensoren in einer übergeordneten Einheit programmiert werden muss. So kann vorteilhaft beispielsweise eine Richtungserkennung bereits im Sensor selbst durchgeführt werden. Hierbei wird eine zeitliche Abfolge des Detektorsignals auf einer Zeitskala von typischen Bewegungen eines zu überwachenden Objekts durchgeführt und es werden hierbei die einzelnen Überwachungsteilbereiche 92, 94 ausgewertet. Wenn beispielsweise in Fig. 1 erst der Strahlengang des Lichts 42 und anschließend der Strahlengang des Lichts 22 unterbrochen wird, kann sich ein zu überwachendes Objekt nur von oben nach unten bewegt haben. Der Sensor kann dann vorteilhafterweise so programmiert werden, dass ein Ausgang nur dann schaltet, wenn sich das Objekt in dieser Richtung bewegt oder bewegt hat.

Ergänzend eröffnet sich die Möglichkeit eines zweiten Ausgangs; der nur auf Objekte in der entgegengesetzten Bewegungsrichtung reagiert. Darüber hinaus sind eine Vielzahl von weiteren Auswertungen mit dem erfindungsgemäßen optischen Sensor und dem erfindungsgemäßen Verfahren möglich und können je nach Aufgabenstellung zweckmäßig sein.

Für eine Positionserkennung kann ein nachzuweisendes Objekt auch mit einer optischen Strukturierung versehen werden. Beispielsweise können auf dem Objekt abwechselnd stark reflektierende und weniger stark reflektierende Streifen, beispielsweise weiße oder schwarze Streifen, angeordnet sein. Auch ein Einfräsen von Schlitzen in einer Oberfläche des Objekts ist möglich. Befindet sich nun ein Überwachungsteilbereich über einem stark reflektierenden Abschnitt des Objekts, sieht der entsprechende Kanal "hell", das heißt es wird ein hoher Anteil des eingestrahlten Lichts zurückreflektiert oder gestreut. Wenn andererseits das eingestrahlte Licht auf einen dunklen Streifen fällt, wird nur wenig Intensität zurückreflektiert oder gestreut und das Detektorsignal ist entsprechend reduziert. Aus der zeitlichen Abfolge, wann einer der Überwachungsteilbereiche zuerst "hell" sieht, kann die Auswerteeinheit des Sensors 100 eine Bewegungsrichtung des entsprechenden Abschnitts ermitteln. Wenn sich der Abschnitt in einer bestimmten Richtung bewegt, wird der Stand eines Zählers in der Auswerteeinheit um ein Inkrement, beispielsweise um eins, erhöht und in der entgegengesetzten Richtung um eins vermindert. Auf diese Weise kann jedem Zählerstand eine feste Position zugeordnet werden, die über Schaltausgänge signalisiert oder auch über eine Schnittstelle zur Datenkommunikation abgefragt werden kann.

Eine weitere wichtige Anwendung betrifft den Einsatz eines erfindungsgemäßen optischen Sensors 100 als sogenannter Bahnkantensensor. Wenn in dem in Fig. 1 gezeigten Ausführungsbeispiel einer der Überwachungsteilbereiche "hell" sieht, sich mithin kein Objekt im entsprechenden Strahlengang befindet, und der andere Überwachungsteilbereich auf "dunkel" schaltet, befindet sich ein nachzuweisendes Objekt, beispielsweise also eine Kante eines bahnartigen Materials, in einer klar definierten Position. Wenn beide Überwachungsteilbereiche "hell" sehen, weicht die Position des Objekts in einer Richtung ab, die durch die Orientierung des Sensors festgelegt ist. Dies ist in der in Fig. 2 gezeigten Situation beispielsweise der Fall, wenn eine obere Kante 12 des nachzuweisenden Objekts 10 soweit absinkt, dass das Licht 22 des Lichtsenders 20 von dieser Kante nicht mehr abgeblockt wird und demgemäß frei bis zum Retroreflektor 90 gelangen kann. Wenn beide Überwachungsteilbereiche "dunkel" sehen, wird die Abweichung in der anderen Richtung angezeigt. In Fig. 2 ist dies der Fall, wenn sich das nachzuweisende Objekt 10 soweit nach oben verschiebt, dass die Kante 12 des Objekts 10 oberhalb des Strahlengangs des Lichts 42 liegt und demgemäß sowohl das Licht 22 des Lichtsenders 20 als auch das Licht 42 des Lichtsenders 40 vom Objekt 10 abgeblockt wird. Bei Verwendung von mehr als zwei Sendern kann dann abhängig von der Anzahl der "hell" sehenden Überwachungsteilbereiche eine quantitative Aussage über die Abweichung von einer Mittenposition getroffen werden. Die Ausgabe dieser Abweichung kann wiederum über mindestens zwei Ausgänge oder eine Schnittstelle zur Datenkommunikation erfolgen.

Eine weitere einfache und wichtige Anwendung der vorliegenden Erfindung kann ebenfalls mit Bezug auf Fig. 2 erläutert werden. Hierbei wird eine Höhe eines Objekts 10 überwacht. Wenn das Objekt in der in Fig. 2 gezeigten Situation zu hoch angeordnet ist, wird sowohl das Licht 22 des Lichtsenders 20 als auch das Licht 42 des Lichtsenders 40 unterbrochen. Wenn das Objekt andererseits zu niedrig ist, sind die Lichtwege für das Licht 22, 42 frei. Besonders vorteilhaft ist bei dieser Anwendung, wenn mehr als zwei Sender, beispielsweise vier Sender, eingesetzt werden. Dann ist eine genauere Auswertung der Höhe von zu überwachenden Objekten möglich. Das Ergebnis kann dann dazu dienen, das nachzuweisende Objekt abhängig von seiner Größe automatisch in ein bestimmtes Lagerfach einzusortieren oder in unterschiedliche Richtungen zu transportieren. Auch eine Bewegungsrichtung des Objekts 10, beispielsweise in einer Richtung 14 quer zu den Hauptstrahlrichtungen 29, 49 kann mit dem in Fig. 2 gezeigten optischen Sensor 100 überwacht werden.

Ein wesentlicher Vorteil des erfindungsgemäßen optischen Sensors ist, dass alle vorstehend erläuterten Funktionalitäten prinzipiell in einem einzigen Sensor integriert werden können. Beispielsweise können über Schalter die entsprechenden Modi auswählbar sein oder es wird für jede Funktion ein separater Ausgang zur Verfügung gestellt. Der Vorteil hierbei betrifft sowohl den Anwender, der für verschiedene Anwendungen denselben Sensor verwendet und damit Aufwand in der Logistik spart als auch den Sensorhersteller. Die höhere Funktionalität sichert eine höhere zu fertigende Stückzahl und somit auch geringere Herstellungskosten.

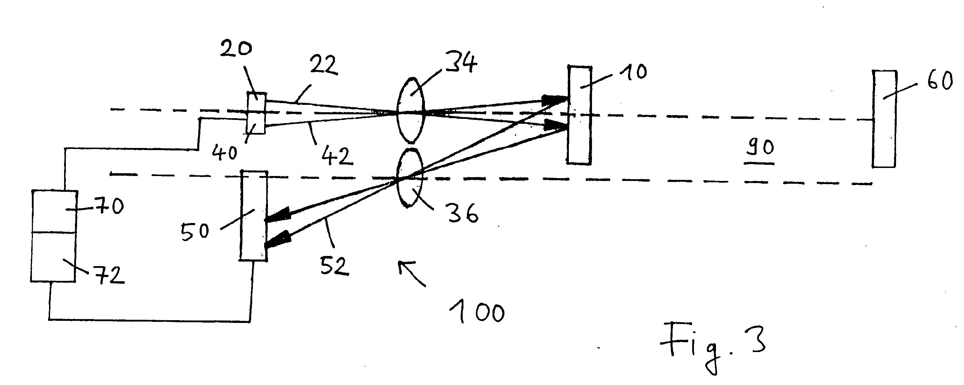

Fig. 3 zeigt eine Variante, bei der statt einer gemeinsamen Autokollimationsoptik 30 eine Sendeoptik 34, mit der Licht 22, 42 in den Überwachungsbereich 90 geleitet wird, sowie eine hiervon getrennte Detektor- oder Empfangsoptik 36 verwendet wird. Im Übrigen entspricht der Aufbau in Fig. 3 der in den Figuren 1 und 2 gezeigten Situation.

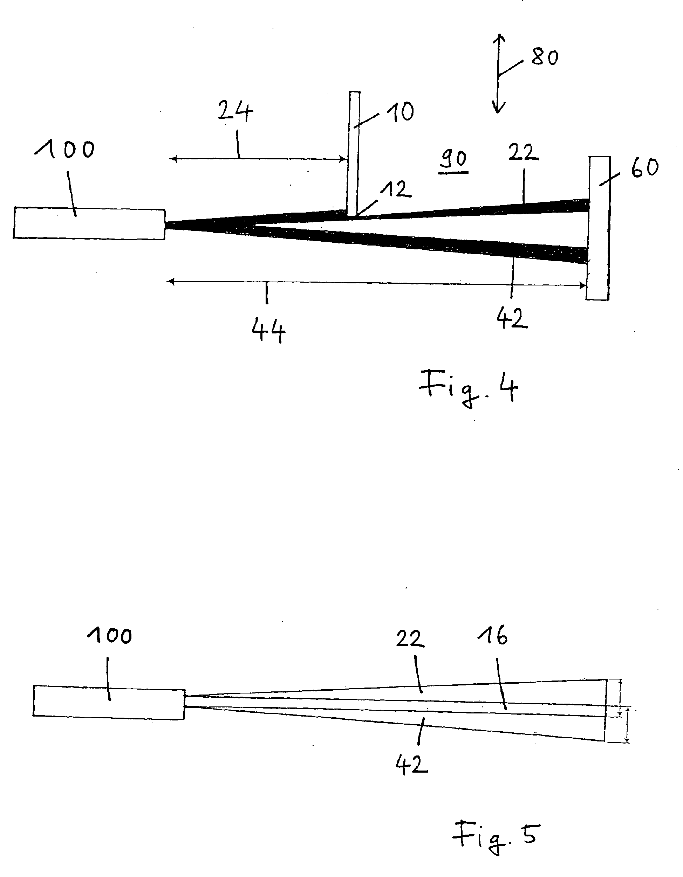

Die Möglichkeiten der Bahnkantenerkennung werden im Zusammenhang mit den Figuren 4 bis 7 näher erläutert. In Fig. 4 wird mit dem optischen Sensor 100 die Position einer Kante 12 eines bahnartigen Materials, beispielsweise also die Kante einer Papier-, Stoff- oder Folienbahn, bestimmt. Der Sensor 100 weist hierzu wiederum zwei Lichtsender auf, die Licht 22 in einen ersten Kanal und Licht 42 in einen zweiten Kanal aussenden. Das nachzuweisende Objekt 10 befindet sich hierbei in einem Abstand 24 vom optischen Sensor 100.

In einem Abstand 44 vom Sensor 100 ist ein Retroreflektor 60 angeordnet, der das eingestrahlte Licht 22, 42 in Richtung des Sensors 100 zurückreflektiert oder -streut.

Die Kernidee des in Fig. 4 gezeigten Ausführungsbeispiels besteht darin, dass der optische Sensor 100 und die Strahlengänge des Lichts 22, 42 des ersten und des zweiten Kanals bezüglich des nachzuweisenden Objekts 10 so positioniert werden, dass vom Licht 22 des ersten Kanals jedenfalls ein Teil durch das Objekt 10 blockiert wird und ein weiterer Teil auf den Retroreflektor 60 fällt. Der Sensor aus Fig. 4 arbeitet demgemäß als Reflexionslichtschranke. Während sich das Objekt 10 mit seiner Kante 12 in einer Sollposition befindet, wird ein Einlernvorgang durchgeführt. Das Objekt 10 kann prinzipiell im gesamten Bereich des Lichtstrahls 22 positioniert sein, wobei sicherzustellen ist, dass das Objekt 10 mindestens einen kleinen Teil des Lichts 22 unterbricht und mindestens einen kleinen Anteil des Lichts 22 durchlässt. Der Sensor 100 speichert die Höhe des während des Einlernvorgangs reflektierten Detektorsignals. Im folgenden Betrieb wertet der Sensor 100 das Detektorsignal aus. Dies kann zu bestimmten Zeitpunkten oder kontinuierlich erfolgen. Wenn ein bestimmter Schwellwert überschritten wird, befindet sich das Objekt in einer Fehlposition, in Fig. 3 beispielsweise in einer zu hoher Position, das heißt es gelangt vom Licht 22 ein zu großer Anteil auf den Retroreflektor 60 und wird anschließend im Detektor nachgewiesen. Wenn andererseits ein kleinerer zweiter Schwellwert unterschritten wird, befindet sich die Kante 12 des Objekts 10 in Fig. 4 zu weit unten, das heißt ein zu großer Anteil des Lichts 42 wird vom Objekt 10 verdeckt und das Nachweissignal ist entsprechend geringer. Über den Abstand der beiden Schwellwerte kann ein zulässiger Bereich definiert werden. Über zwei Ausgänge, die jeweils einer bestimmten Richtung zugeordnet sind, kann außerdem die Abweichung an eine übergeordnete Steuerung übermittelt werden, die sodann das Objekt 10 und damit die Kante 12 entsprechend entlang dem Pfeil 80 in die richtige Richtung verschieben kann.

Um den zulässigen Bereich des Objekts 10 möglichst klein zu halten und damit eine sehr präzise Positionierung zu realisieren, muss der Sensor 100 in der Lage sein, auch sehr kleine Kontraste des Empfangssignals auszuwerten. So kann beispielsweise gefordert werden, und dies kann auch mit Hilfe der Erfindung realisiert werden, dass bereits eine Unterschreitung des eingelernten Werts um 5% zu einem Schalten eines Ausgangs oder andererseits eine Überschreitung um 5% zum Schalten des anderen Ausgangs führt.

Zusätzlich zum Objekt 10 können aber auch sonstige Umweltbedingungen Einfluss auf das Empfangssignal haben. Im Allgemeinen sind die Eigenschaften von elektronischen Bauelementen temperaturabhängig, so dass sich das Empfangssignal mit der Temperatur ändert. Beispielsweise führt eine Verschmutzung einer Frontscheibe des Sensors oder des Retroreflektors zu einer Verringerung des Empfangssignals. Die Folge dieser Einflüsse wäre eine Verschiebung der Objektpositionen, in denen die Ausgänge schalten. Um die Schaltpunkte unabhängig von Umwelteinflüssen zu halten, muss eine ständige Nachregelung der Empfindlichkeit vorgenommen werden. Hierzu dient bei dem in Fig. 4 gezeigten Beispiel der zweite, durch das Licht 42 gebildete untere Kanal, dessen Lichtweg zum Retroreflektor 60 frei sein muss. Das Empfangssignal des unteren Kanals wird durch das Objekt 10 nicht beeinflusst und registriert deshalb ständig die Summe der Einwirkungen von Umwelteinflüssen auf den Sensor 100. Diese Information kann dazu genutzt werden, um das Schaltverhalten des oberen Kanals derart zu kompensieren, dass die Raumpositionen des Objekts, in denen der Sensor schaltet, nicht geändert werden.

Die Kompensation kann beispielsweise so gestaltet werden, dass beide Kanäle über einen gemeinsamen Empfangsweg geleitet werden. Dessen Verstärkung kann dann so variiert werden, dass das resultierende Empfangssignal des unteren Kanals konstant bleibt. Eine andere Möglichkeit ist, die Schwellwerte abhängig von der Höhe des Empfangssignals des unteren Kanals zu variieren.

Eine weitere Möglichkeit, die Position einer Bahnkante zu bestimmen, wird mit Bezug auf die Figuren 5 bis 7 beschrieben. Im Unterschied zu dem in Fig. 4 gezeigten Beispiel besteht bei der in Fig. 5 schematisch dargestellten Variante die Grundidee darin, die Strahlengänge des Lichts 22, 42 des ersten und des zweiten Kanals so zueinander auszurichten, dass ein Überlappungsbereich 16 des Lichts gebildet wird. Weiterhin wird das nachzuweisende Objekt 10 so positioniert, dass eine Kante dieses Objekts in dem Überlappungsbereich 16 der beiden Kanäle liegt.

Dieses Messprinzip lässt sich sowohl unter Verwendung eines Retroreflektors als auch im tastenden Betrieb anwenden, wenn die Empfindlichkeit der Auswertung entsprechend erhöht wird.

Beispielsweise können wiederum beide Kanäle abwechselnd gepulst werden, um jeweils das Empfangssignal auswerten zu können. Eine Kante eines nachzuweisenden Objekts, dessen Position auszuwerten ist, muss sich im Überlappungsbereich 16 der beiden Kanäle befinden. Während eines Einlernvorgangs ermittelt und speichert der Sensor 100 das Verhältnis der beiden, auf das Licht 22 bzw. das Licht 42 zurückgehenden Empfangssignale. Im laufenden Messbetrieb wird sodann das Verhältnis dieser beiden Signale mit dem eingespeicherten eingelernten Wert verglichen und ausgewertet. Der Vorteil dieser Anordnung besteht darin, dass der Abstand vom Sensor und die Oberflächeneigenschaften des nachzuweisenden Objekts 10 im Wesentlichen keinen Einfluss auf den Ort der Schaltpunkte haben. Die Optik sollte hierzu so ausgelegt sein, dass der Überlappungsbereich 16 einen parallelen Strahlengang mit konstantem Durchmesser bildet, wie dies beispielsweise in Fig. 5 gezeigt ist.

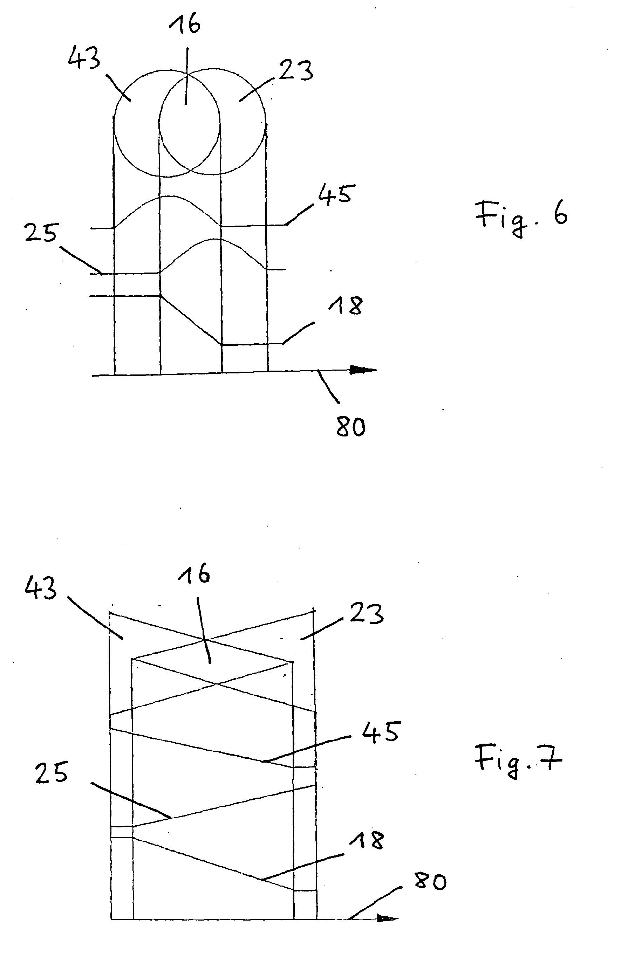

Im Hinblick auf die Geometrien der eingesetzten Strahlquerschnitte besteht grundsätzlich große Gestaltungsfreiheit. Zwei Varianten sind in den Figuren 6 und 7 gezeigt. Dem Licht 22 entspricht hierin ein Lichtfleck 23 und dem Licht 42 ein Lichtfleck 43. In der in Fig. 6 gezeigten Variante handelt es sich bei den Lichtflecken 23, 43 im Wesentlichen um Kreise, welche in einem Bereich 16 überlappen. Außerdem sind in den Diagrammen das auf das Licht 42 zurückgehende Empfangssignal 45 sowie das auf das Licht 22 zurückgehende Empfangssignal 25 eingezeichnet. Darunter ist schematisch jeweils das Verhältnis 18 dieser beiden Signale 25, 45 eingetragen. Sämtliche Signale sind gegen eine Position 80 der Kante eines, beispielsweise von links, in den Strahlengang einfahrenden Objekts aufgetragen.

Fig. 7 zeigt ein weiteres Ausführungsbeispiel, in dem die Querschnitte 23, 43 eine Dreiecksform aufweisen, was beispielsweise mit geeigneten Blenden realisiert werden kann. Hierbei ergibt sich ein deutlich erweiterter Überlappungsbereich 16, in dem sich die Sollposition einer Bahnkante bewegen kann. Die konkrete Geometrie der Überlappungsbereiche 16 kann auf die Erfordernisse des Einzelfalls angepasst werden.

Mit der vorliegenden Erfindung wird ein hochfunktionaler optischer Sensor und ein besonders vielseitig einsetzbares Verfahren zum Nachweis von Objekten in einem Überwachungsbereich bereitgestellt, wobei mit Hilfe einer Mehrzahl von Lichtquellen mehrere Überwachungsteilbereiche überwacht und entsprechend zwei oder mehrere Sensorausgänge angesteuert werden. Mit dem erfindungsgemäßen Sensor und dem erfindungsgemäßen Verfahren können insbesondere eine Bewegungsrichtung von Objekten, eine Positionserkennung oder eine Höhenkontrolle, bevorzugt mit einer hohen Anzahl von Sendern, durchgeführt werden. Bei einer besonders bevorzugten Anwendung wird der erfindungsgemäße optische Sensor zum Nachweis einer Bahnkantenposition oder zur Bahnkantenregelung eingesetzt. Ein Teil dieser Funktionen oder prinzipiell auch sämtliche dieser Funktionen können in einem einzigen Sensor integriert werden und es können entsprechende Wahlmittel, wie beispielsweise Umschalter oder mehrere separate Ausgänge vorgesehen sein, um die einzelnen Modi zu aktivieren.

## Patentansprüche

1. Optischer Sensor zur Positionsbestimmung von Objekten in einem Überwachungsbereich (90), insbesondere zur Durchführung des Verfahrens nach einem der Ansprüche 9 bis 18,
mit einer Mehrzahl von Lichtsendern (20, 40) zum Aussenden von Licht (22, 42), wobei jedem Lichtsender (20, 40) ein Überwachungsteilbereich (92, 94) zugeordnet ist, in welchen der jeweilige Lichtsender (20, 40) Lichtsignale aussendet, und
mit einer Ansteuereinheit (70) zum Ansteuern der Lichtsender (20, 40),
**dadurch gekennzeichnet,**
**dass** zum Nachweis von von einem nachzuweisenden Objekt (10) reflektiertem und/oder gestreutem Licht (52) genau ein gemeinsamer Detektor (50) vorhanden ist, welcher genau ein zeitabhängiges Detektionssignal liefert,
**dass** die Ansteuereinheit (70) zum zeitlich jeweils unterschiedlichen Aktivieren der verschiedenen Lichtsender (20, 40) eingerichtet ist,
**dass** eine mit dem Detektor (50) verbundene Auswerteeinheit (72) vorhanden ist, die mit der Ansteuereinheit (70) zusammenwirkt und zum Auswerten des Detektionssignals sowie zum Zuordnen von einzelnen Anteilen des Detektionssignals zu Lichtsignalen der verschiedenen Lichtsender (20, 40) eingerichtet ist,
**dass** die Auswerteeinheit (72) zum Abspeichern von für das nachzuweisende Objekt (10) spezifischen Vergleichsdaten eingerichtet ist und
**dass** die Auswerteeinheit (72) für das Bestimmen und Ausgeben einer Position des nachzuweisenden Objekts (10) im Überwachungsbereich durch Vergleich der einzelnen Signalanteile mit den Vergleichsdaten eingerichtet ist.

2. Optischer Sensor nach Anspruch 1,
**dadurch gekennzeichnet,**
**dass** ein Reflektor (60) zum Begrenzen des Überwachungsbereichs (90) vorhanden ist.

3. Optischer Sensor nach Anspruch 2,
**dadurch gekennzeichnet,**
**dass** der Reflektor (60) mehrteilig gebildet ist.

4. Optischer Sensor nach einem der Ansprüche 1 bis 3,
**dadurch gekennzeichnet,**
**dass** der Detektor (50) ein einziges Detektorelement aufweist.

5. Optischer Sensor nach einem der Ansprüche 1 bis 4,
**dadurch gekennzeichnet,**
**dass** genau zwei Lichtsender (20, 40) vorhanden sind.

6. Optischer Sensor nach einem der Ansprüche 1 bis 5,
**dadurch gekennzeichnet,**
**dass** die Überwachungsteilbereiche (92, 94) von mindestens zwei Lichtsendern (20, 40) sich überlappen.

7. Optischer Sensor nach einem der Ansprüche 1 bis 6,
**dadurch gekennzeichnet,**
**dass** zum Leiten des Lichts (22, 42) der Lichtsender (20, 40) in den Überwachungsbereich (90) eine gemeinsame Sendeoptik (34) vorhanden ist und
**dass** zum Leiten des Lichts (52) auf den Detektor (50) eine von der Sendeoptik (34) verschiedene Detektoroptik (36) vorhanden ist.

8. Optischer Sensor nach einem der Ansprüche 1 bis 7,
**dadurch gekennzeichnet,**
**dass** die Lichtsender (20, 40) Infrarot-Lichtquellen, insbesondere Infrarot-Laserdioden, sind.

9. Verfahren zur Positionsbestimmung von Objekten in einem Überwachungsbereich, insbesondere unter Verwendung eines optischen Sensors nach einem der Ansprüche 1 bis 8,
bei dem eine Mehrzahl von Lichtsendern (20, 40) Licht (22, 42) in Überwachungsteilbereiche (92, 94) aussendet, die den Lichtsendern (20, 40) jeweils zugeordnet sind,
**dadurch gekennzeichnet,**
**dass** von dem nachzuweisenden Objekt (10) im Überwachungsbereich (90) und/oder von einem Reflektor (60) reflektiertes und/oder gestreutes Licht (52) mit genau einem gemeinsamen Detektor (50) nachgewiesen wird,
**dass** dem von den verschiedenen Lichtsendern (20, 40) ausgehenden Licht (22, 42) eine jeweils unterschiedliche zeitliche Struktur aufgeprägt wird,
**dass** das Detektorsignal bezüglich der auf die unterschiedlichen Lichtsender (20, 40) zurückgehenden Signalanteile ausgewertet wird,
**dass** für das nachzuweisende Objekt (10) gemessene Normalwerte der gestreuten und/oder reflektierten Lichtintensität als Vergleichsdaten eingelernt werden,
**dass** die auf die unterschiedlichen Lichtsender (20, 40) zurückgehenden Signalanteile des Detektorsignals mit den Vergleichsdaten verglichen werden und
**dass** abhängig vom Resultat dieses Vergleichs eine Position des Objektes (10) bestimmt und ausgegeben wird.

10. Verfahren nach Anspruch 9,
**dadurch gekennzeichnet,**
**dass** die Lichtsender (20, 40) abwechselnd gepulst werden.

11. Verfahren nach Anspruch 9 oder 10,
**dadurch gekennzeichnet,**
**dass** ein Strahl eines Lichtsenders (20, 40) als Referenzstrahl verwendet wird, der im Normalbetrieb nicht auf das nachzuweisende Objekt (10) fällt.

12. Verfahren nach einem der Ansprüche 9 bis 11,
**dadurch gekennzeichnet,**
**dass** die Vergleichsdaten für eine Vielzahl von Positionen des Objekts (10) abgespeichert werden.

13. Verfahren nach einem der Ansprüche 9 bis 12,
**dadurch gekennzeichnet,**
**dass** eine Position des Objekts (10) in einer Richtung (14) quer zu einer Erstrekkungsrichtung der Hauptstrahlrichtungen der Lichtsender (20, 40) bestimmt wird.

14. Verfahren nach einem der Ansprüche 9 bis 13,
**dadurch gekennzeichnet,**
**dass** auch eine Bewegungsrichtung des Objekts (10) bestimmt und ausgegeben wird.

15. Verfahren nach einem der Ansprüche 9 bis 14,
**dadurch gekennzeichnet,**
**dass** das zu überwachende Objekt (10) eine Kante (12) eines bahnartigen Materials ist und
**dass** der optische Sensor (100) bezüglich der Kante (12) so positioniert wird, dass mindestens für den Strahlengang eines Lichtsenders (20) ein Teil des Lichts (22) durchgelassen wird und ein weiterer Teil von der Kante (12) abgeblockt wird.

16. Verfahren nach einem der Ansprüche 9 bis 15,
**dadurch gekennzeichnet,**
**dass** für die zu überwachenden Objekte (10) eine Höhenkontrolle durchgeführt wird.

17. Verfahren nach einem der Ansprüche 9 bis 16,
**dadurch gekennzeichnet,**
**dass** das zu überwachende Objekt eine Streifenstruktur aufweist, welche Schaltvorgänge des optischen Sensors (100) auslösen kann und
**dass** der optische Sensor (100) als Inkrementalgeber betrieben wird.

18. Verfahren nach einem der Ansprüche 9 bis 17,
**dadurch gekennzeichnet,**
**dass** mindestens ein Verhältnis (18) von auf verschiedene Lichtsender (20, 40) zurückgehenden Signalanteilen des Detektorsignals gebildet und ausgewertet wird.
